# EUROPÄISCHE PATENTSCHRIFT

(11) **EP 2 143 749 B1**
(45) Veröffentlichungstag und Bekanntmachung des Hinweises auf die Patenterteilung: **05.01.2011**
(21) Anmeldenummer: 09164629.9
(22) Anmeldetag: 06.07.2009
(51) Int. Cl.: C08G 63/78

(54) **Verfahren zur Herstellung von Polyester, insbesondere linearer Polyester, für Textilgarne und Textilfasern sowie für Flaschen und Anlage zur Durchführung des Verfahrens**
Method for production of polyester, in particular linear polyester for textile threads, textile fibres and for bottles and assembly for carrying out the method
Procédé de fabrication de polyester, notamment de polyester linéaire, pour fils textiles et fibres textiles ainsi que pour bouteilles et installation destinée à l'exécution du procédé

(30) Priorität: 12.07.2008 DE 102008032934; 25.02.2009 DE 102009010597
(43) Veröffentlichungstag der Anmeldung: 13.01.2010
(73) Patentinhaber: Epc Industrial Engineering GmbH, 63755 Alzenau (DE)
(72) Erfinder: Streng, Michael, 63477, Maintal (DE)
(74) Vertreter: Meissner, Bolte & Partner

(56) Entgegenhaltungen:
- EP-A1- 1 818 352
- WO-A1-2007/088074
- US-A- 4 100 142

## Beschreibung

Die Erfindung betrifft ein Verfahren zur Herstellung von Polyester, insbesondere linearer Polyester, für Textilgarne und Textilfasern sowie für Flaschen und eine Anlage zur Durchführung des Verfahrens gemäß den Oberbegriffen der Patentansprüche 1 und 11.

Die Herstellung linearer Polyester für Textilgarne und Textilfasern unterscheidet sich grundsätzlich von linearen Polyestern für Flaschen in dem Aufbau der Rezeptur des Polymers. Faserpolymere werden üblicherweise aus den Rohstoffen Terephthalsäure und Ethylenglykol in Gegenwart von Katalysatoren wie Antimontrioxid oder Antimonglykolat hergestellt, wogegen Polyester für die Herstellung von Flaschen neben Terephthalsäure und Ethylenglykol weitere Co-Monomere wie z. B. Isophthalsäure, Cyclohexandimethanol oder Diethylenglykol zugesetzt werden [USP 4,340,721]. Neben den Co-Monomeren, die ein Kristallisationsverzögerung und Reduzierung der Schmelztemperatur bewirken, sind für die Stabilisierung gegen Vergilbung während der Folgestufe Festphasenkondensation (SSP) Phosphorstabilisatoren erforderlich [USP 4,088,635]. Zusätzlich können zur Feinabstimmung der Farbe Toner zugesetzt werden [USP 5,235,027]. Für spezielle Einsatzzwecke kann es erforderlich sein, Infrarot-Absorber zuzusetzen [USP 6,358,578].

Aufgrund der durch diese Zusätze zum Flaschengranulat hervorgerufenen Veränderungen der Polymereigenschaften ist dieses Polymer nicht geeignet zur Herstellung von qualitativ hochwertigen Standard POY-Garnen oder Standard Stapelfaser oder biaxial orientiertem Polyesterfilm, was zur Folge hat, dass diese verschiedenen Polymerrohstoffe auf getrennten Produktionsanlagen hergestellt werden.

Aus der US 4,100,142 A ist ein Verfahren zur Herstellung von fasertauglichen PET vorbekannt. Gemäß dem dortigen Verfahren wird in einer Einstrang-Technologie aus der Disäure und dem Diol zunächst eine Veresterung vorgenommen, dann das Olygomer hergestellt und letztendlich das Polymer erhalten. Die Edukte werden in einem Mengenverhältnis von 1 : 1.2 bis 1 : 1.8 eingesetzt und können in Anwesenheit eines antimonhaltigen Katalysators verarbeitet werden.

Aus der WO 2007/088074 A1 ist ein Verfahren zur Herstellung von PET Homo- und Copolymeren unter Verwendung von Antimonkatalysatoren bekannt, wobei bestimmte Additive eingesetzt werden. Die erhaltenen PET-Polymere eignen sich zur Flaschenherstellung.

Die EP 1 818 352 A1 offenbart ein Verfahren zur Herstellung eines Veresterungszwischenproduktes, welches dann anschließend einer Polymerisation zugeführt wird.

Hervorgerufen durch Verschiebungen im Markt oder die örtlichen Erfordernisse kann es für einen Produzenten erforderlich sein, beide Sortimente gleichzeitig zu produzieren und die Kapazität des einen oder anderen Sortimentes zu reduzieren oder zu erhöhen. Das bedeutet, dass kontinuierliche Anlagen auf das jeweilig andere Sortiment umgestellt werden müssen und in Kampagnen produziert werden muss. Diese Produktionsweise ist aufwendig und wegen der großen Mengen an Übergangsmaterial und der notwendigen überdimensionalen Lagerkapazitäten ökonomisch wenig sinnvoll und von Nachteil. Dies gewinnt besonders dadurch an Bedeutung, dass die Kapazität moderner Anlagen zur Herstellung von Polyester stetig wächst, wodurch bei Sortimentsumstellungen zusätzlich erhöhte Kosten verursacht werden.

Die Aufgabe der Erfindung besteht darin, ein gegenüber dem Stand der Technik verbessertes, insbesondere kontinuierliches, und flexibles Verfahren zur Herstellung von Polyester, insbesondere linearer Polyester, für Textilgarne und Textilfasern sowie für Flaschen und eine Anlage zur Durchführung des Verfahrens zur Verfügung zu stellen.

Ziel eines solchen verbesserten kontinuierlichen und flexiblen Verfahrens zur Herstellung linearer Polyester ist es, den Vorteil eines ökonomischen Durchsatzes von größer 300 t pro Tag, speziell für die Prozessstufe mit dem höchsten Energieverbrauch, der Veresterung von Terephthalsäure und Ethylenglykol, beizubehalten und trotzdem eine hohe Flexibilität in der Herstellung der Endprodukte bereitzustellen.

Diese Aufgabe wird durch ein Verfahren gemäß Patentanspruch 1 sowie eine Anlage zur Durchführung des Verfahrens gemäß Patentanspruch 11 gelöst. Insbesondere wird die Aufgabe durch ein Verfahren zur Herstellung von Polyester, insbesondere linearer Polyester, für Textilgarne und Textilfasern sowie für Flaschen,
gelöst, wobei folgende Schritte durchgeführt werden:
- Zugeben von Terephthalsäure und Ethylenglykol in einem Molverhältnis von 1 : 1 bis 1 : 1,5, vorzugsweise 1 : 1 bis 1 : 1,3, mit einer erforderlichen Menge an Katalysator, wie beispielsweise Antimontrioxid oder Antimonglykolat, in einen ersten Veresterungsreaktor A, zur Erzeugung einer ersten Reaktionszusammensetzung;
- Verestern der ersten Reaktionszusammensetzung in einer ersten Umsatzstufe bis ein Umsatzgrad von größer 85 % , vorzugsweise von größer 90 %, erreicht ist, zur Herstellung eines ersten Veresterungszwischenprod u kts;
- Aufteilen des ersten Veresterungszwischenprodukts aus dem ersten Veresterungsreaktor A in zwei oder mehrere Teilströme;
- Zuführen der Teilströme in zwei oder mehrere Reaktionskessel B1, B2 bis Bx, zur Herstellung eines ersten bis x-ten Veresterungsprodukts im Zuge einer jeweiligen zweiten Umsatzstufe B;
- Verestern des aus dem Veresterungsreaktor A dem Reaktionskessel B1 zugeführten Veresterungszwischenprodukts einschließlich des enthaltenen Katalysators ohne weitere Zusätze bis zu einem Umsatzgrad von > 98% zur Herstellung von Textilpolyester für Textilgarne und Textilfasern;
- Verestern des aus dem Veresterungsreaktor A dem/den Reaktionskessel(n) B2 bis Bx zugeführten Veresterungszwischenprodukts einschließlich des enthaltenen Katalysators'unter, insbesondere kontinuierlicher, Zugabe von Isophthalsäure (IPA), Ethylenglykol (MEG), Diethylenglykol (DEG) sowie gegebenenfalls weiteren, insbesondere bifunktionellen, Co-Monomeren und Zusatzstoffen, vorzugsweise in Form eines vorgemischten Reaktionsgemischs, für die Herstellung von Polyester für Flaschen; und
- Fördern der Umsatzprodukte aus den Reaktionskesseln B1, B2 bis Bx der zweiten Umsatzstufe B zu jeweils vorgesehenen weiteren Verarbeitungsstufen, insbesondere Vorkondensation und Polykondensation.

Gemäß einer Ausführungsform der Erfindung wird das Reaktionsgemischs bestehend aus Isophthalsäure (IPA), Ethylenglykol (MEG) und Diethylenglykol (DEG) sowie gegebenenfalls weiteren Co-Monomeren und Zusatzstoffen bei einer Temperatur von > 40°C und < 280°C kontinuierlich in die Reaktionskessel B2 bis Bx zugegeben, wobei ein Ansatz für ein Vormischen des Reaktionsgemischs wahlweise kontinuierlich oder alternierend erfolgen kann.

Darüber hinaus ist erfindungsgemäß vorgesehen, dass das vorgemischte Reaktionsgemisch aus Isophthalsäure (IPA), Ethylenglykol (MEG) und Diethylenglykol (DEG) sowie gegebenenfalls weiteren Co-Monomeren und Zusatzstoffen bei einer Temperatur > 40°C und < 280°C zubereitet, insbesondere zur Reaktion gebracht, wird und dabei entstehendes Reaktionswasser vor einem Einspeisen in die Reaktionskessel B2 bis Bx abgetrennt und zur Rektifikation in zu den Reaktionskesseln B2 bis Bx gehörende Kolonne(n) geleitet wird.

Es sei an dieser Stelle erwähnt, dass die erste Reaktionszusammensetzung sowie gegebenenfalls das vorgemischte Reaktionsgemisch in Form einer Paste verwendet werden. Ferner wird das Zugeben und das Verestern der ersten Reaktionszusammensetzung in der ersten Umsatzstufe i vorteilhafter Weise kontinuierlich durchgeführt, wobei sich bildendes Reaktionswasser zusammen mit verdampfendem Ethylenglykol in Form eines Gemischs einer zentralen Rektifikationskolonne zugeführt und in der Rektifikationskolonne Ethylenglykol aus dem Gemisch abgetrennt wird. Das hierbei zurück gewonnene Ethylenglykol wird mit bis zu 0,8 Mol pro Mol Terephthalsäure zum ersten Veresterungsreaktor A zurückgeführt.

Gemäß einer Ausführungsform der Erfindung werden zur Herstellung von linearen Polyestern zur Herstellung von Flaschen als Zusatzstoffe, wie beispielsweise Bluetoner, IR-Absorber und Phosphorstabilisator in vorbestimmten und unterschiedlichen Konzentrationen verwendet.

Im Übrigen werden erfindungsgemäß im Rahmen einer ökonomischen und ökologischen Verfahrensführung in dem/den Reaktionskessel(n) B2 bis Bx entstehende Wasser/Ethylenglykol-Gemische, insbesondere -Brüden in einer oder mehreren separaten Rektifikationskolonne(n) vom Wasser getrennt und Schwersieder wieder in die Reaktionskessel B2 bis Bx zugeführt.

Ein weiterer Punkt der eRfindung besteht darin, dass Gewichtanteile an Isophthalsäure + Diethylenglykol + weiterer bifunktioneller Co-Monomerer, welche in die Reaktionskessel B2 bis Bx zugegeben werden, 10% vom ursprünglichen Ansatzvolumen Terephthalsäure + Ethylenglykol im Veresterungsreaktor A nicht überschreiten, und dabei die Summe der relativen Reaktionsvolumina der Reaktionskessel B2 bis Bx 0,01 bis 10% größer ist als das relative Reaktionsvolumen des ersten Reaktionskessels B1 der zweiten Umsatzstufe B.

Darüber hinaus wird die erfindungsgemäße Aufgabe durch eine Anlage zur, vorzugsweise kontinuierlichen, Herstellung von Polyester, insbesondere linearer Polyester, für Textilgarne und Textilfasern sowie für Flaschen, gelöst, wobei die Anlage zumindest folgendes aufweist:
- einen ersten Veresterungsreaktor A, zur Aufnahme einer ersten Reaktionszusammensetzung und zur Herstellung eines ersten Veresterungszwischenprodukts;
- zwei oder mehrere Reaktionskessel B1, B2 bis Bx, zur Herstellung eines ersten bis x-ten Veresterungsprodukts im Zuge einer jeweiligen zweiten Umsatzstufe B;
- Mittel zum Aufteilen des ersten Veresterungszwischenprodukts aus dem ersten Veresterungsreaktor A in zwei oder mehrere Teilströme;
- Mittel zum Zuführen der Teilströme in die zwei oder mehr Reaktionskessel B1, B2 bis Bx;
- Mittel zum Fördern der Umsatzprodukte aus den Reaktionskesseln B1, B2 bis Bx in weitere Kessel zum Durchführen einer Vorkondensation und Polykondensation.

Erfindungsgemäß ist die Anlage so ausgelegt, dass die Summe der relativen Reaktionsvolumina der Reaktoren bzw. Reaktionskessel B1+B2+Bx im Bereich 0,01 bis 10% größer als das relative Reaktionsvolumen des ersten Veresterungsreaktors A ist, wobei das für die Reaktion von reiner Terephthalsäure und Ethylenglykol allein benötigte relative Reaktionsvolumen in der Reaktionsstufe B mit 100% angenommen wird.

Gemäß einer Ausführungsform der Erfindung sind die Reaktionskessel B1, B2 bis Bx, sowie gegebenenfalls der erste Veresterungsreaktor A, von gleicher Bauart, weisen jedoch vorzugsweise unterschiedliche Reaktionsvolumina auf.

Zusammenfassend lässt sich der Gegenstand der Erfindung somit wie folgt als Verfahren zur Herstellung linearer Polyester für Textilgarne und Textilfasern sowie für Flaschen in einer Anlage, wobei die Rohstoffe Terephthalsäure und Ethylenglykol, die sowohl zur Herstellung von Textilpolyester als auch zur Herstellung von Flaschenpolyester benötigt werden, in einem Molverhältnis von 1 : 1 bis 1 : 1,3 als Paste zusammen mit der erforderlichen Menge an Katalysator gemeinsam in einen ersten Veresterungsreaktor A eingespeist und dort kontinuierlich verestert werden, bis ein Umsatzgrad größer 90% erreicht wird, und das sich bildende Reaktionswasser zusammen mit ebenfalls verdampftem Ethylenglykol einer zentralen Rektifikationskolonne zugeführt werden und das Gemisch dort vom Ethylenglykol getrennt wird, wobei Abwasser mit einem Restgehalt < 0,8% Ethylenglykol abgeführt wird und von dem zurück gewonnenen Ethylenglykol bis zu 0,8 Mol pro Mol Terephthalsäure zum ersten Veresterungsreaktor zurückgeführt werden und das Veresterungsprodukt nach dem Veresterungsreaktor A in zwei oder mehrere Teilströme aufgetrennt und die Teilströme in zwei oder mehrere Reaktionskessel B1, B2 bis Bx von gleicher Bauart, aber von unterschiedlichen Reaktionsvolumina, geleitet werden, wobei die Summe der relativen Reaktionsvolumina der Reaktionskessel B1+B2+Bx im Bereich 0,01 bis 10% größer als das relative Reaktionsvolumen des ersten Veresterungsreaktors A ausgeführt ist und das für die Reaktion von reiner Terephthalsäure und Ethylenglykol allein benötigte relative Reaktionsvolumen in der Reaktionsstufe B mit 100% angenommen wird und zum einen in einem Reaktionskessel B1 der zweiten Stufe das Veresterungsprodukt mit Katalysator vom Veresterungsreaktor A ohne weitere Zusätze auf einen Umsatzgrad von > 98% zur Herstellung von Textilpolyester reagiert wird und zum anderen in den Reaktionskesseln B2 bis Bx der zweiten Stufe dem Veresterungsprodukt mit Katalysator vom Veresterungsreaktor A kontinuierlich ein Reaktionsgemisch bestehend aus Isophthalsäure, Ethylenglykol, Diethylenglykol und wahlweise weiteren Co-Monomeren sowie anderen für die Herstellung von Flaschenpolyester notwendigen Zusatzstoffen wie Bluetoner, IR-Absorber und Phosphorstabilisator in wahlweise unterschiedlichen Konzentrationen zugesetzt werden, wobei die Gewichtanteile an Isophthalsäure + Diethylenglykol + weiterer bifunktioneller Co-Monomerer 10% vom ursprünglichen Ansatzvolumen Terephthalsäure + Ethylenglykol im Veresterungsreaktor A nicht überschreiten, und dabei die Summe der relativen Reaktionsvolumina der Reaktionskessel B2 bis Bx 0,01 bis 10% größer ist als das relative Reaktionsvolumen des ersten Reaktionskessels B1 der zweiten Stufe, und die in den Stufen B2 bis Bx, denen die o.g. Additive zugeführt wurden, entstehenden Wasser/Ethylenglykol-Brüden in einer separaten Rektifikationskolonne vom Wasser getrennt und die Schwersieder wieder in die Reaktionskessel B2 bis Bx zugeführt werden und die Umsatzprodukte aus den Reaktionskesseln der zweiten Umsatzstufe B zu den jeweils vorgesehenen weiteren Stufen der Vorkondensation und Polykondensation gefördert werden. Ferner weist das kontinuierlich zugesetzte Stoffgemisch aus Isophthalsäure (IPA), Ethylenglykol (MEG) und Diethylenglykol (DEG) und Additiven eine Temperatur > 40°C und < 280°C auf, wobei der Ansatz für das Stoffgemisch wahlweise kontinuierlich oder alternierend erfolgen kann. Im Übrigen wird das kontinuierlich zugesetzte Gemisch aus Isophthalsäure (IPA), Ethylenglykol (MEG) und Diethylenglykol (DEG) und Additiven bei einer Temperatur > 40°C und < 280°C zur Reaktion gebracht wird und das dabei entstehende Reaktionswasser vor dem Einspeisen in die Reaktionskessel B2 bis Bx abgetrennt und zur Rektifikation in die zu den Reaktionskesseln B2 bis Bx gehörenden Kolonne geleitet wird.

Weitere Ausführungsformen der Erfindung ergeben sich aus den Unteransprüchen.

Nachfolgend wird die Erfindung anhand von Ausführungsbeispielen beschrieben, die anhand von Abbildungen näher erläutert werden. Hierbei zeigen:
- Fig. 1: eine schematische Darstellung eine erfindungsgemäße Anlage zur gleichzeitigen Herstellung von Textil- und Flaschenpolyester gemäß einer ersten Ausführungsform; und
- Fig. 2: eine schematische Darstellung eine erfindungsgemäße Anlage zur gleichzeitigen Herstellung von Textil- und Flaschenpolyester gemäß einer zweiten Ausführungsform.

In der nachfolgenden Beschreibung werden für gleiche und gleichwirkende Teile dieselben Bezugsziffern verwendet.

Gemäß nachfolgendem Beispiel wird das erfindungsgemäße Ziel dadurch erreicht, dass eine Anlage zur Herstellung von linearen Polyestern für Faseranwendungen und für Flaschen so errichtet wird, dass in einem ersten gemeinsamen Veresterungsreaktor A mit einer Kapazität von 300 bis 2000 t/Tag die Rohstoffe Terephthalsäure und Ethylenglykol in einem Molverhältnis von 1 : 1 bis 1 : 1,5, vorzugsweise 1 : 1 bis 1 : 1,3 als Paste zusammen mit der erforderlichen Menge an Katalysatoren eingespeist und kontinuierlich verestert werden, bis ein Umsatzgrad größer 90% erreicht wird. Das sich bildende Reaktionswasser wird zusammen mit ebenfalls verdampftem Ethylenglykol einer zentralen Rektifikationskolonne zugeführt. Das Gemisch wird dort vom Ethylenglykol getrennt, wobei Abwasser mit einem Restgehalt < 0,8% Ethylenglykol abgeführt wird und von dem zurück gewonnenen Ethylenglykol bis zu 0,8 Mol pro Mol Terephthalsäure zum ersten Veresterungsreaktor zurückgeführt werden.

Das Veresterungsprodukt nach dem gemeinsamen Veresterungsreaktor A wird dann in zwei oder mehrere Teilströme aufgetrennt und die Teilströme werden in zwei oder mehrere Reaktionskessel B1, B2 bis Bx von gleicher Bauart aber von unterschiedlichen Reaktionsvolumina geleitet, wobei die Summe der relativen Reaktionsvolumina der Reaktionskessel B1+B2+Bx im Bereich 0,01 bis 10% größer ausgeführt ist als das relative Reaktionsvolumen des ersten Veresterungsreaktors A.

Das für die Reaktion von reiner Terephthalsäure und Ethylenglykol allein benötigte relative Reaktionsvolumen in der Reaktionsstufe B wird mit 100% angenommen. In einem Reaktionskessel B1 der zweiten Stufe wird das Veresterungsprodukt vom Veresterungsreaktor A ohne weitere Zusätze auf einen Umsatzgrad von > 98% reagiert.

Den Reaktionskesseln B2 bis Bx der zweiten Stufe wird dem Veresterungsprodukt vom Veresterungsreaktor A kontinuierlich ein Reaktionsgemisch, bestehend aus Isophthalsäure, Ethylenglykol, Diethylenglykol und wahlweise weiteren Co-Monomeren sowie anderen für die Herstellung von Flaschengranulat notwendigen Zusatzstoffen wie Bluetoner, IR-Absorber und Phosphorstabilisator in wahlweise unterschiedlichen Konzentrationen, zugesetzt, wobei die Gewichtsanteile an Isophthalsäure + Diethylenglykol + weiterer bifunktioneller Co-Monomerer 10% vom ursprünglichen Ansatzvolumen Terephthalsäure + Ethylenglykol im Veresterungsreaktor A nicht überschreiten. Dabei ist die Summe der relativen Reaktionsvolumina der Reaktionskessel B2 bis Bx 0,01 bis 10% größer als das relative Reaktionsvolumen des ersten Reaktionskessels B1 der zweiten Stufe.

Die in den Stufen B2 bis Bx, denen die o.g. Additive zugeführt wurden, entstehenden Wasser/Ethylenglykol-Brüden, werden in einer separaten Rektifikationskolonne vom Wasser getrennt, und die Schwersieder werden wieder in die Reaktionskessel B2 bis Bx zurückgeführt.

Die Umsatzprodukte aus den Reaktionskesseln der zweiten Umsatzstufe werden zu den jeweils vorgesehenen weiteren Stufen der Vorkondensation und Polykondensation gefördert.

Das den Reaktionskesseln B2 bis Bx kontinuierlich zugesetzte Reaktionsgemisch aus Isophthalsäure (IPA), Ethylenglykol (MEG) und Diethylenglykol (DEG) und Additiven weist eine Temperatur > 40°C und < 280°C auf, wobei der Ansatz wahlweise kontinuierlich oder alternierend erfolgt. Das kontinuierlich zugesetzte Gemisch aus Isophthalsäure (IPA), Ethylenglykol (MEG) und Diethylenglykol (DEG) und Additiven kann bei einer Temperatur > 40°C und < 280°C zur Reaktion gebracht werden, und das dabei entstehende Reaktionswasser wird vor dem Einspeisen in die Reaktionskessel B2 bis Bx abgetrennt.

Das erfindungsgemäße Verfahren wird in 2 nachfolgenden Beispielen näher erläutert. In der Zeichnung sind die Einzelheiten wie folgt dargestellt:

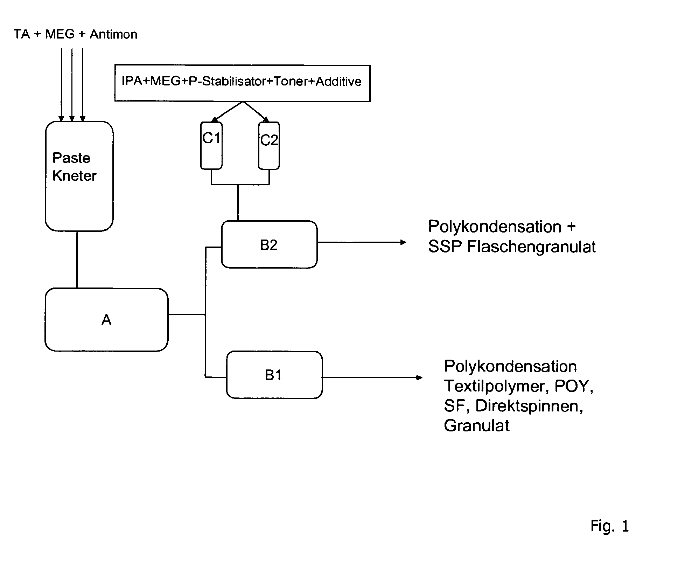

In Fig. 1 ist eine schematische Darstellung einer ersten Ausführungsform einer erfindungsgemäßen Anlage in Form einer Kombianlage dargestellt, bei der der erste Veresterungsreaktor A auf eine Umsatzkapazität von 1200 t/d ausgelegt ist und die Reaktionskessel der zweiten Veresterung B1 für Textilpolymer auf 600 t/d und B2 für Flaschengranulat auf 650 t/d ausgelegt sind. Die Zusatzstoffe und Co-Monomere für das Flaschengranulat werden wechselweise in den Vormisch-Reaktionskesseln C1 und C2 angesetzt, zum gewünschten Umsatzgrad reagiert und kontinuierlich dem Reaktionskessel B2 bis zu einem Anteil von maximal 10% zugesetzt.

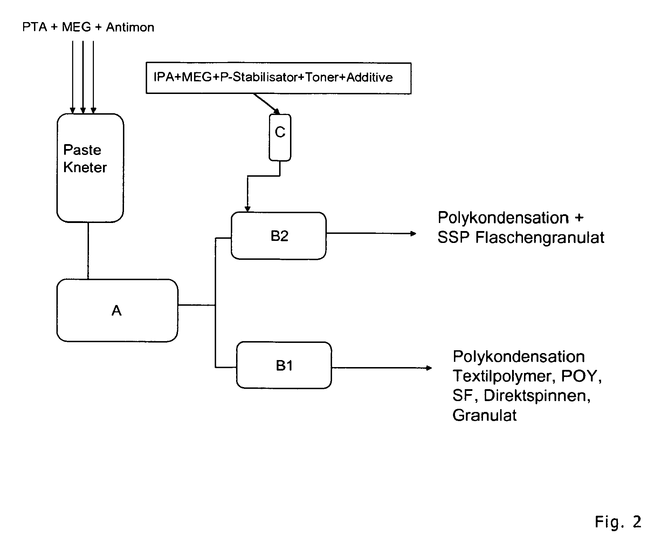

Fig. 2 zeigt eine schematische Darstellung einer zweiten Ausführungsform einer erfindungsgemäßen Anlage in Form einer Kombianlage, bei der der erste Veresterungsreaktor A auf eine Umsatzkapazität von 1200 t/d und die Reaktionskessel der zweiten Veresterung B1 für Textilpolymer auf 600 t/d und B2 für Flaschengranulat auf 650 t/d ausgelegt sind. Die Zusatzstoffe und Co-Monomere für das Flaschengranulat bestehen aus einem Pastegemisch von Isophthalsäure (IPA), Ethylenglykol (MEG) und Diethylenglykol (DEG) und Additiven, welches kontinuierlich in einem Vormisch-Reaktionskessel C hergestellt und dem Reaktionskessel B2 kontinuierlich zugeführt wird und dort die Veresterungsreaktion der IPA als auch die Einbringung der Co-Monomere und Additive stattfindet.

### Bezugszeichenliste

- A: Veresterungsreaktor
- B1, B2 bis Bx: Reaktionskessel
- C, C1, C2: Vormisch-Reaktionskessel

## Patentansprüche

1. Verfahren zur Herstellung von Polyester, insbesondere linearer Polyester, für Textilgarne und Textilfasern sowie für Flaschen, **gekennzeichnet durch**,
die folgenden Schritte:
- Zugeben von Terephthalsäure und Ethylenglykol in einem Molverhältnis von 1 : 1 bis 1 : 1,5, vorzugsweise 1 : 1 bis 1 : 1,3, mit einer erforderlichen Menge an Katalysator, wie beispielsweise Antimontrioxid oder Antimonglykolat, in einen ersten Veresterungsreaktor A, zur Erzeugung einer ersten Reaktionszusammensetzung;
- Verestern der ersten Reaktionszusammensetzung in einer ersten Umsatzstufe bis ein Umsatzgrad von größer 85 % , vorzugsweise von größer 90 %, erreicht ist, zur Herstellung eines ersten Veresterungszwischenprodukts;
- Aufteilen des ersten Veresterungszwischenprodukts aus dem ersten Veresterungsreaktor A in zwei oder mehrere Teilströme;
- Zuführen der Teilströme in zwei oder mehrere Reaktionskessel B1, B2 bis Bx, zur Herstellung eines ersten bis x-ten Veresterungsprodukts im Zuge einer jeweiligen zweiten Umsatzstufe B;
- Verestern des aus dem Veresterungsreaktor A dem Reaktionskessel B1 zugeführten Veresterungszwischenprodukts einschließlich des enthaltenen Katalysators ohne weitere Zusätze bis zu einem Umsatzgrad von > 98% zur Herstellung von Textilpolyester für Textilgarne und Textilfasern;
- Verestern des aus dem Veresterungsreaktor A dem/den Reaktionskessel(n) B2 bis Bx zugeführten Veresterungszwischenprodukts einschließlich des enthaltenen Katalysators unter, insbesondere kontinuierlicher, Zugabe von Isophthalsäure (IPA), Ethylenglykol (MEG), Diethylenglykol (DEG) sowie gegebenenfalls weiteren, insbesondere bifunktionellen, Co-Monomeren und Zusatzstoffen, vorzugsweise in Form eines vorgemischten Reaktionsgemischs, für die Herstellung von Polyester für Flaschen; und
- Fördern der Umsatzprodukte aus den Reaktionskesseln B1, B2 bis Bx der zweiten Umsatzstufe B zu jeweils vorgesehenen weiteren Verarbeitungsstufen, insbesondere Vorkondensation und Polykondensation.

2. Verfahren nach Anspruch 1,
**dadurch gekennzeichnet, dass**
das Reaktionsgemischs bestehend aus Isophthalsäure (IPA), Ethylenglykol (MEG) und Diethylenglykol (DEG) sowie gegebenenfalls weiteren Co-Monomeren und Zusatzstoffen bei einer Temperatur von > 40°C und < 280°C kontinuierlich in die Reaktionskessel B2 bis Bx zugegeben wird, wobei ein Ansatz für ein Vormischen des Reaktionsgemischs wahlweise kontinuierlich oder alternierend erfolgen kann.

3. Verfahren nach einem der vorhergehenden Ansprüche,
**dadurch gekennzeichnet, dass**
das vorgemischte Reaktionsgemisch aus Isophthalsäure (IPA), Ethylenglykol (MEG) und Diethylenglykol (DEG) sowie gegebenenfalls weiteren Co-Monomeren und Zusatzstoffen bei einer Temperatur > 40°C und < 280°C zubereitet, insbesondere zur Reaktion gebracht, wird und dabei entstehendes Reaktionswasser vor einem Einspeisen in die Reaktoren B2 bis Bx abgetrennt und zur Rektifikation in zu den Reaktoren B2 bis Bx gehörende Kolonne(n) geleitet wird.

4. Verfahren nach einem der vorhergehenden Ansprüche,
**dadurch gekennzeichnet, dass**
die erste Reaktionszusammensetzung sowie gegebenenfalls das vorgemischte Reaktionsgemisch in Form einer Paste verwendet werden.

5. Verfahren nach einem der vorhergehenden Ansprüche,
**dadurch gekennzeichnet, dass**
das Zugeben und das Verestern der ersten Reaktionszusammensetzung in der ersten Umsatzstufe kontinuierlich durchgeführt wird.

6. Verfahren nach einem der vorhergehenden Ansprüche,
**dadurch gekennzeichnet, dass**
sich bildendes Reaktionswasser zusammen mit verdampfendem Ethylenglykol in Form eines Gemischs einer zentralen Rektifikationskolonne zugeführt und in der Rektifikationskolonne Ethylenglykol aus dem Gemisch abgetrennt wird.

7. Verfahren nach Anspruch 6,
**dadurch gekennzeichnet, dass**
zurück gewonnenes Ethylenglykol mit bis zu 0,8 Mol pro Mol Terephthalsäure zum ersten Veresterungsreaktor A zurückgeführt wird.

8. Verfahren nach einem der vorhergehenden Ansprüche,
**dadurch gekennzeichnet, dass**
als Zusatzstoffe Bluetoner, IR-Absorber und Phosphorstabilisator in vorbestimmten unterschiedlichen Konzentrationen verwendet werden.

9. Verfahren nach einem der vorhergehenden Ansprüche,
**dadurch gekennzeichnet, dass**
in dem/den Reaktionskessel(n) B2 bis Bx entstehende Wasser/Ethylenglykol-Gemische, insbesondere -Brüden in einer oder mehreren separaten Rektifikationskolonne(n) vom Wasser getrennt und Schwersieder wieder in die Reaktoren B2 bis Bx zugeführt werden.

10. Verfahren nach einem der vorhergehenden Ansprüche,
**dadurch gekennzeichnet, dass**
Gewichtanteile an Isophthalsäure + Diethylenglykol + weiterer bifunktioneller Co-Monomerer, welche in die Reaktionskessel B2 bis Bx zugegeben werden, 10% vom ursprünglichen Ansatzvolumen Terephthalsäure + Ethylenglykol im Veresterungsreaktor A nicht überschreiten, und dabei die Summe der relativen Reaktionsvolumina der Reaktionskessel B2 bis Bx 0,01 bis 10% größer ist als das relative Reaktionsvolumen des ersten Reaktionskessels B1 der zweiten Umsatzstufe B.

11. Anlage zur, vorzugsweise kontinuierlichen, Herstellung von Polyester, insbesondere linearer Polyester, für Textilgarne und Textilfasern sowie für Flaschen,
**dadurch gekennzeichnet, dass**
die Anlage zumindest folgendes aufweist:
- einen ersten Veresterungsreaktor A, zur Aufnahme einer ersten Reaktionszusammensetzung und zur Herstellung eines ersten Veresterungszwischenprodukts;
- zwei oder mehrere Reaktionskessel B1, B2 bis Bx, zur Herstellung eines ersten bis x-ten Veresterungsprodukts im Zuge einer jeweiligen zweiten Umsatzstufe B;
- Mittel zum Aufteilen des ersten Veresterungszwischenprodukts aus dem ersten Veresterungsreaktor A in zwei oder mehrere Teilströme;
- Mittel zum Zuführen der Teilströme in die zwei oder mehr Reaktionskessel B1, B2 bis Bx;
- Mittel zum Fördern der Umsatzprodukte aus den Reaktionskesseln B1, B2 bis Bx in weitere Kessel zum Durchführen einer Vorkondensation und Polykondensation.

12. Anlage nach Anspruch 11,
**dadurch gekennzeichnet, dass**
die Summe der relativen Reaktionsvolumina der Reaktoren B1+B2+Bx im Bereich 0,01 bis 10% größer als das relative Reaktionsvolumen des ersten Veresterungsreaktors A ist, wobei das für die Reaktion von reiner Terephthalsäure und Ethylenglykol allein benötigte relative Reaktionsvolumen in der Reaktionsstufe B mit 100% angenommen wird.

13. Anlage nach einem der vorhergehenden Ansprüche 11 oder 12,
**dadurch gekennzeichnet, dass**
die Reaktionskessel B1, B2 bis Bx, sowie gegebenenfalls der erste Veresterungsreaktor A, von gleicher Bauart aber unterschiedlichen Reaktionsvolumina sind.

## Claims

1. A method for producing polyester, in particular linear polyester for textile yarns, textile fibers and for bottles, comprising the following steps:
- adding terephthalic acid and ethylene glycol at a molar ratio of 1 : 1 to 1 : 1.5, preferably 1 : 1 to 1 : 1.3, with a sufficient amount of catalyst like e.g. antimony trioxide or antimony glycolate, in a first esterification reactor A for generating a first reactive compound;
- esterifying the first reactive compound in a first transformation step until a degree of transformation of greater than 85%, preferably > 90%, is reached for producing a first intermediary esterification product;
- dividing the first esterification product from the first esterification reactor A in two or plural partial flows;
- supplying the partial flows to two or plural reaction vessels B1, B2 through Bx for producing a first to x-th esterification product in a respective second transformation step B;
- esterifying the intermediary esterification product supplied from the esterification reactor A to the reaction vessel B1 including the contained catalyst without additional additives up to a degree of transformation
> 98% for producing textile polyester for textile yarns and textile fibers;
- esterifying the intermediary esterification product supplied from the esterification reactor A to the reaction vessel(s) B2 to Bx, including the contained catalyst, in particular continuous adding of isophthalic acid (IPA), ethylene glycol (MEG), diethylene glycol (DEG), and possibly additional, in particular bi-functional co-monomers and additives, preferably in the form of a premixed reactive mix for producing polyester for bottles; and
- feeding the transformed products from the reactive vessels, B1, B2 through Bx from the second conversion step B to respectively provided additional processing steps, in particular pre-condensation and poly-condensation.

2. The method according to claim 1, wherein the reactive mix including isophthalic acid (IPA), ethylene glycol (MEG) and diethylene glycol (DEG) and possibly additional co-monomers and additives at a temperature of > 40°C and < 280°C, is continuously supplied to the reaction vessels B2 through Bx, wherein a start portion for premixing the reactive mix can be provided optionally continuously or in an alternating manner.

3. The method according to one of the preceding claims, wherein the premixed reactive mix including isophthalic acid (IPA), ethylene glycol (MEG) and diethylene glycol (DEG) and possibly additional co-monomers and additives is prepared at a temperature of > 40°C and < 280°C, and in particular brought to a reaction and reactive water thus created is separated before the reactive mix is fed to the reactors B2 through Bx and supplied for rectification to column(s) associated with the reactors B2 through Bx.

4. The method according to one of the preceding claims, wherein the first reactive mix and possibly the premixed reactive mix are being used in the form of a paste.

5. The method according to one of the preceding claims, wherein adding and esterifying the first reactive mix in the first transformation stage is performed continuously.

6. The method according to one of the preceding claims, wherein reactive water that is being created is supplied together with evaporating ethylene glycol in the form of a mix to a central rectification column and ethylene glycol is separated from the mix in the rectification column.

7. The method according to claim 6, wherein reclaimed ethylene glycol is fed back to the first esterification reactor A at a rate of up to 0.8 Mol per mol terephthalic acid.

8. The method according to one of the preceding claims, wherein blue toners, IR absorbers and phosphorous stabilizers are being used as additives in predetermined various concentrations.

9. The method according to one of the preceding claims, wherein water / ethylene glycol mixes, in particular water ethylene glycol exhaust vapors, created in the reactive vessel(s) B2 through Bx are separated in one or plural separate rectification column(s) from water, and compounds evaporating later are fed back to the reactors B2 through Bx.

10. The method according to one of the preceding claims, wherein portions by weight of isophthalic acid + diethylene glycol + additional bi-functional co-monomers, which are supplied to the reaction vessels B2 through Bx do not exceed 10% of the original batch volume of terephthalic acid + ethylene glycol in the esterification reactor A, and thus the sum of the relative reaction volumes of the reaction vessels B2 through Bx is greater by 0.01 : 10 % than the relative reaction volume of the first reaction vessel B1 of the second conversion step.

11. A device for preferably continuous production of polyester, in particular linear polyester for textile yarns and textile fibers and for bottles, the device comprising at least the following:
- a first esterification reactor A for receiving a first reactive compound and for producing a first intermediary esterification product;
- two or plural reaction vessels, B1, B2 through Bx for producing a first to x-th esterification product in a respective second conversion step B;
- devices for dividing the first intermediary esterification product from the first esterification reactor A into two or plural partial flows;
- devices for feeding the partial flows into the two or plural reactive vessels B1, B2 through Bx;
- devices for feeding the transformation products from the reactive vessels, B1, B2 through Bx to additional vessels for performing a pre-condensation and a poly-condensation.

12. The device according to claim 11, wherein the sum of the relative reactive volumes of the reactors B1 + B2 + Bx is greater than the relative reactive volume of the first esterification reactor A by 0.1 % to 10%, wherein the relative reactive volume required for reacting pure terephthalic acid and ethylene glycol by themselves in the reaction stage B is presumed to be 100%.

13. The device according to one of the preceding claims 11 or 12, wherein the reactive vessels B1, B2 though Bx and possibly the first esterification reactor A are identical in configuration, but have different reactive volumes.

## Revendications

1. Procédé pour la fabrication de polyester, en particulier de polyester linéaire, pour des filaments et des fibres textiles ainsi que pour des bouteilles, **caractérisé par** les étapes suivantes :
- apport d'acide téréphtalique et d'éthylène glycol dans un rapport molaire de 1:1 à 1:1,5, de préférence 1:1 à 1:1,3, avec une quantité nécessaire de catalyseur, comme par exemple du trioxyde d'antimoine ou du glycolate d'antimoine, dans un premier réacteur d'estérification A, pour générer une première composition de réaction ;
- estérification de la première composition de réaction dans un premier étage de conversion jusqu'à atteindre un degré de conversion supérieur à 85 %, de préférence supérieur à 90 %, pour fabriquer un premier produit intermédiaire d'estérification ;
- subdivision du premier produit intermédiaire d'estérification provenant du premier réacteur d'estérification A en deux ou plusieurs flux partiels ;
- admission des flux partiels dans deux ou plusieurs enceintes de réaction B1, B2 à Bx, pour la fabrication d'un premier à un x-ième produit d'estérification au cours d'un second étage de conversion respectif B ;
- estérification du produit intermédiaire d'estérification provenant du réacteur d'estérification A amené dans l'enceinte de réaction B1, y compris le catalyseur contenu, sans autre additif jusqu'à un degré de conversion supérieur à 98 % pour la fabrication de polyester textile pour des filaments et des fibres textiles ;
- estérification du produit intermédiaire d'estérification provenant du réacteur d'estérification A amené dans les enceintes de réaction B2 à Bx, y compris le catalyseur contenu, sous apport, en particulier continu, d'acide isophtalique (IPA), d'éthylène glycol (MEG), de diéthylène glycol (DEG) ainsi le cas échéant que d'autres co-monomères et produits additionnels, en particulier bifonctionnels et de préférence sous la forme d'un mélange de réaction préalablement mélangé, pour la fabrication de polyester destiné à des bouteilles ; et
- convoyage du produit de réaction hors les enceintes de réaction B1, B2 à Bx du second étage de conversion B vers d'autres étages de traitement respectivement prévus, en particulier des étages de précondensation et de polycondensation.

2. Procédé selon la revendication 1,
**caractérisé en ce que** le mélange de réaction constitué d'acide isophtalique (IPA), d'éthylène glycol (MEG) et de diéthylène glycol (DEG) ainsi que le cas échéant d'autres co-monomères et produits additionnels est amené à une température supérieure à 40° C et inférieure à 280° C en continu dans les enceintes de réaction B2 à Bx, et un amorçage pour un mélange préalable du mélange de réaction peut avoir lieu au choix en continu ou en alternance.

3. Procédé selon l'une des revendications précédentes,
**caractérisé en ce que** le mélange réaction préalablement mélangé formé d'acide isophtalique (IPA), d'éthylène glycol (MEG) et de diéthylène glycol (DEG) ainsi que le cas échéant d'autres co-monomères et produits additionnels est préparé à une température supérieure à 40° C et inférieure à 280° C, en particulier amené à la réaction, et l'eau de réaction qui se produit ici est séparée avant une introduction dans les réacteurs B2 à Bx et est dirigée, pour la rectification, dans des colonnes appartenant aux réacteurs B2 à Bx.

4. Procédé selon l'une des revendications précédentes,
**caractérisé en ce que** la première composition de réaction, ainsi que le cas échéant le mélange de réaction préalablement mélangé, sont utilisés sous forme d'une pâte.

5. Procédé selon l'une des revendications précédentes,
**caractérisé en ce que** l'apport et l'estérification de la première composition de réaction dans le premier étage conversion sont exécutés en continu.

6. Procédé selon l'une des revendications précédentes,
**caractérisé en ce que** l'eau de réaction qui se forme, conjointement avec l'éthylène glycol vaporisé sont amenés sous la forme d'un mélange à une colonne de rectification centrale et on sépare l'éthylène glycol hors du mélange dans la colonne de rectification.

7. Procédé selon la revendication 6,
**caractérisé en ce que** l'éthylène glycol récupéré est amené au premier réacteur d'estérification A avec de l'acide téréphtalique, jusqu'à 0,8 moles par mole.

8. Procédé selon l'une des revendications précédentes,
**caractérisé en ce que** l'on utilise à titre de produits additionnels du toner bleu ("bluetoner"), un produit absorbant les rayons infrarouges et un stabilisateur au phosphore, dans différentes concentrations prédéterminées.

9. Procédé selon l'une des revendications précédentes,
**caractérisé en ce que** le mélange eau/éthylène glycol qui apparaît dans les enceintes de réaction B2 à Bx, en particulier les buées de ce mélange, sont séparés de l'eau dans une ou plusieurs colonnes de rectification séparées et les condensats lourds sont à nouveau amenés dans les réacteurs B2 à Bx.

10. Procédé selon l'une des revendications précédentes,
**caractérisé en ce que** les parts pondérales d'acide isophtalique + diéthylène glycol + autre co-monomères bifonctionnels, qui sont amenés dans les enceintes de réaction B2 à Bx, ne dépassent pas 10 % des volumes d'amorçages initiaux d'acide téréphtalique + éthylène glycol dans le réacteur d'estérification A, et la somme des volumes de réaction relatifs des enceintes de réaction B2 à Bx est ici supérieure de 0,01 à 10 % au volume de réaction relatif de la première enceinte de réaction B1 du second étage de conversion B.

11. Installation pour la fabrication, de préférence en continu, de polyester, en particulier de polyester linéaire, pour des filaments et des fibres textiles ainsi que pour des bouteilles,
**caractérisée en ce que** l'installation comprend au moins les éléments suivants :
- un premier réacteur d'estérification A, pour recevoir une première composition de réaction et pour fabriquer un premier produit intermédiaire d'estérification ;
- deux ou plusieurs enceintes de réaction B1, B2 à Bx, pour la fabrication d'un premier à un x-ième produit d'estérification au cours d'un second étage de conversion respectif B ;
- des moyens pour subdiviser le premier produit intermédiaire d'estérification provenant du premier réacteur d'estérification A en deux ou plusieurs flux partiels ;
- des moyens pour amener les flux partiels dans les deux ou plusieurs enceintes de réaction B1, B2 à Bx ;
- des moyens pour convoyer les produits de conversion hors des enceintes de réaction B1, B2 à Bx dans d'autres enceintes pour exécuter une précondensation et une polycondensation.

12. Installation selon la revendication 11,
**caractérisée en ce que** la somme des volumes de réaction relatifs des réacteurs B1 + B2 + Bx est supérieure, dans une plage de 0,01 à 10 %, au volume de réaction relatif du premier réacteur d'estérification A, le volume de réaction relatif nécessaire pour la seule réaction d'acide téréphtalique pur et d'éthylène glycol dans l'étage de réaction B étant pris égal à 100 %.

13. Installation selon l'une des revendications précédentes 11 ou 12,
**caractérisée en ce que** les enceintes de réaction B1, B2 à Bx, ainsi que le cas échéant le premier réacteur d'estérification A, ont le même type de construction mais des volumes de réaction différents.
